# EUROPÄISCHE PATENTSCHRIFT

(11) **EP 0 734 610 B1**
(45) Veröffentlichungstag und Bekanntmachung des Hinweises auf die Patenterteilung: **10.09.1997**
(21) Anmeldenummer: 95902051.2
(22) Anmeldetag: 02.12.1994
(51) Int. Cl.: H02K 9/14, H02K 9/06

(54) **ANTRIEBSEINHEIT**
DRIVING UNIT
UNITE D'ENTRAINEMENT

(30) Priorität: 15.12.1993 DE 4342780
(43) Veröffentlichungstag der Anmeldung: 02.10.1996
(73) Patentinhaber: SIEMENS AKTIENGESELLSCHAFT, 80333 München (DE)
(72) Erfinder: ADELSKI, Hans-Joachim, D-97616 Salz (DE); GEMPEL, Hans, D-97618 Wollbach (DE); WAGNER, Herbert, D-97616 Bad Neustadt (DE)
(86) Internationale Anmeldenummer: DE9401444
(87) Internationale Veröffentlichungsnummer: WO9517034

(56) Entgegenhaltungen:
- EP-A- 0 423 616
- EP-A- 0 452 518
- DE-A- 2 145 919
- DE-B- 1 026 840
- GB-A- 2 160 924

## Beschreibung

Die Erfindung betrifft eine Antriebseinheit gemäß dem Oberbegriff des Anspruchs 1 oder 2.

Eine solche Antriebseinheit ist durch die EP-A-0 423 616 bekannt. Um eine ausreichende Kühlkluftmenge durch die im Topfboden vorgesehenen Bohrungen zu fördern, sind diesen Bohrungen an der Außenseite des Topfbodens axial vorstehende Flügel zugeordnet. Wenn eine solche Antriebseinheit nicht mit einem gesonderten Schutzgitter ausgerüstet ist, dann stellen die vorstehenden Flügel eine erhöhte Verletzungsgefahr dar.

Beim Einsatz einer solchen Antriebseinheit in Textilbetrieben besteht außerdem die Gefahr, daß infolge des dort üblichen hohen Flusenanfalles sich Flusen an den Flügeln verfangen und letztlich die im Topfboden vorgesehenen Bohrungen verstopfen. Damit ist keine ausreichende Kühlung des im Innenraum der Trommel angeordneten Motors mehr gewährleistet.

Durch die GB-A-2 160 924 ist ferner ein Axiallüfter bekannt, bei dem der Antriebsmotor in der glockenförmig ausgebildeten Nabe des Axiallüfterrades sitzt. In dem mit der Motorwelle verbundenen Glockenboden sind im Übergangsbereich zur Glockenwand hin Durchtrittsöffnungen für einen zwischen der Oberfläche des Antriebsmotors und der Innenseite der Glockenwand hindurchgeführten Kühlluftstrom vorhanden. Dieser Kühlluftstrom erhält seine Antriebsenergie durch den von dem Axiallüfterrad zwischen seinen beiden Flügelseiten erzeugten Druckunterschied.

Der Erfindung liegt die Aufgabe zugrunde, eine Antriebseinheit der gattungsgemäßen Art so auszubilden, daß die Erzeugung eines ausreichenden Kühllufstromes ohne an der Außenfläche der Antriebseinheit vorgesehene Fördermittel möglich ist.

Die Lösung der gestellten Aufgabe gelingt nach der Erfindung durch die im Kennzeichen des Anspruchs 1 bzw.2 angegebenen Merkmale. Bei einer nach Anspruch 1 gekennzeichneten Antriebseinheit wird an dem oder den in den Spalt ragenden Stegen infolge der Drehung der Trommel jeweils ein Luftstau erzeugt, der zu einer Strömungsbewegung der Luft in dem zwischen der Trommelinnenwand und dem Gehäuse des Elektromotors bestehenden Spalt führt. Eine derartige Strömungsbewegung in dem Spalt wird auch gemäß Anspruch 2 durch den schräg ansteigenden Verlauf der Trommelinnenwand in Kombination mit im Topfboden vorgesehenen Durchtrittsbohrungen erzielt. Durch die auf diese Weise ohne äußere Fördermittel in dem Spalt erzeugte Luftbewegung wird die Wärmeabfuhr des Elektromotors verbessert.

Die Förderwirkung sowohl der Stege als auch der Durchtrittsbohrungen kann dadurch erhöht werden, daß diese jeweils in bezug auf die Achsrichtung der Antriebseinheit schräg verlaufend angeordnet bzw. ausgebildet sind.

Günstige Strömungsverhältnisse werden dadurch erreicht, daß bei einem schräg ansteigenden Verlauf der Trommelinnenwand zum Topfboden hin die Durchtrittsbohrung fluchtend zur Trommelinnenwand im Topfboden vorgesehen ist. Dabei ist wiederum von Vorteil, daß die Durchtrittsbohrung mit der gleichen Steigung wie die Steigung der Trommelinnenwand schräg verlaufend ausgebildet ist. Hierdurch ergibt sich ein glatter Strömungsverlauf ohne Richtungsänderung.

Eine Steigerung der Fördermenge der Kühlluft kann bei einer Ausgestaltung der Antriebseinheit gemäß den Merkmalen des Anspruchs 7 erzielt werden.

Anhand eines in der Zeichnung dargestellten Ausführungsbeispieles wird die Erfindung nachfolgend näher erläutert. Es zeigt:
- FIG 1: eine Antriebseinheit im Längsschnitt,
- FIG 2: eine Antriebseinheit im Querschnitt,
- FIG 3 und 4: weitere Ausführungsvarianten einer Antriebseinheit im Langsschnitt.

Mit 1 ist das Gehäuse eines Elektromotors bezeichnet, das den Ständer 2 des Motors umschließt und an dessen Stirnseiten die Lagerschilde 3 zur Lagerung des Motorläufers 4 befestigt sind. Der Elektromotor ist von einer topfförmigen Trommel 5 umschlossen, die mit ihrem Topfboden 6 mit dem antriebsseitigen Wellenende 7 des Elektromotors verbunden ist und somit von diesem angetrieben wird.

Am Außenumfang des Gehäuses 1 ist mindestens ein Steg 8 angeordnet, der radial in den zwischen der Innenwand 9 der Trommel 5 und der Oberfläche 10 des Gehäuses 1 bestehenden Spalt 11 ragt, wobei die radiale Länge des Steges 8 so bemessen ist, daß keine Berührung der Trommelinnenwand 9 erfolgt. Alternativ kann der Steg 8 auch an der Innenwand 9 radial zum Gehäuse 1 hin ragend angeordnet sein. Außerdem besteht die Möglichkeit sowohl am Gehäuse 1 als auch an der Innenwand 9 jeweils einen oder mehrere Stege 8 vorzusehen, wobei deren radiale Länge wiederum so bemessen ist, daß keine Berührung derselben, d.h. keine Blockierung der Drehbewegung der Trommel 5 erfolgt.

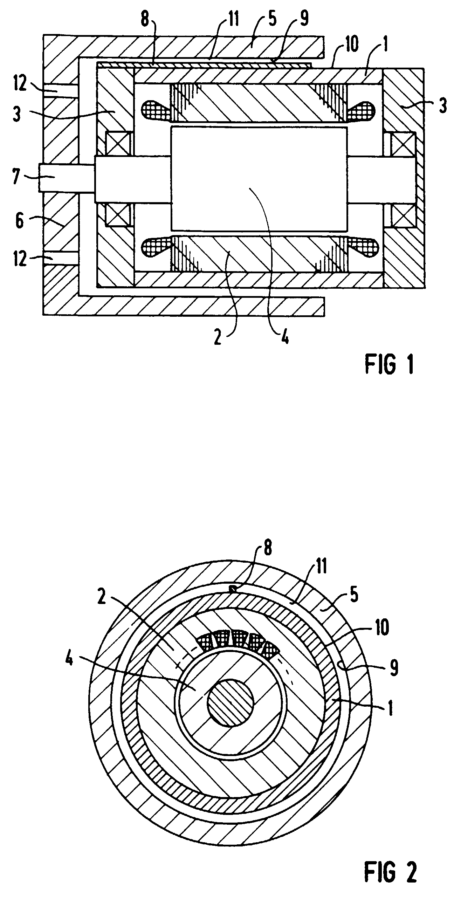

Wie die FIG 1 zeigt, sind im Topfboden 6 der Trommel 5 Durchtrittsbohrungen 12 ausgebildet. Über diese Durchtrittsbohrungen 12 kann je nach Förderrichtung Luft in den Innenraum der Trommel 5 ein- oder austreten, die dann über die Gehäuseoberfläche des Elektromotors zur offenen Seite der Trommel 5 hin austritt oder über diese offene Seite eintritt.

Für die Förderwirkung der Luft ist es günstig, wenn die Stege 8 und/oder die Durchtrittsbohrungen 12 in bezug auf die Achsrichtung der Antriebseinheit schräg verlaufend ausgebildet sind. Hierdurch wird eine axiale Förderrichtung der Luft begünstigt und somit die Kühlung des Elektromotors weiter verbessert.

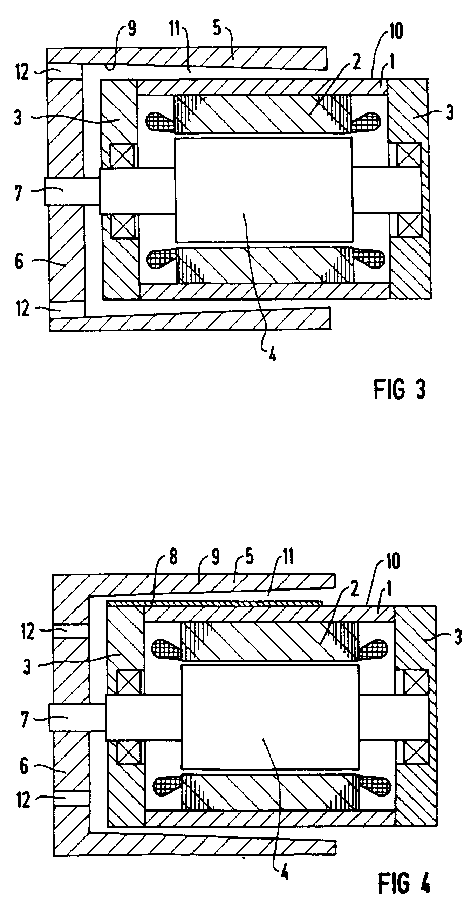

Eine Förderwirkung der Luft durch den Spalt 11 kann auch durch einen schräg ansteigenden Verlauf der Trommelinnenwand 9, wie er bei den in den FIG 3 und 4 dargestellten Ausführungsvarianten dargestellt ist, erreicht werden. Infolge des schrägen Verlaufes der Trommelinnenwand 9 ergibt sich hinsichtlich der durch die Drehbewegung der Trommel erzeugten Fliehkraft eine axial gerichtete Komponente, welche zu einer axialen Strömungsbewegung der Luft führt. Durch die Durchtrittsbohrungen 12 wird die axiale Strömung der Kühlluft ermöglicht.

## Patentansprüche

1. Antriebseinheit, bestehend aus einem Elektromotor und einer von diesem angetriebenen, den Elektromotor aufnehmenden, topfförmigen Trommel (5), die mit ihrem Topfboden (6) mit dem antriebsseitigen Wellenende (7) des Elektromotors verbunden ist und in ihrem Topfboden (6) mindestens eine Durchtrittsbohrung (12) aufweist,
**dadurch gekennzeichnet,**
daß am Gehäuse (1) des Elektromotors und/oder an der Trommelinnenwand (9) mindestens ein radial in den zwischen dem Gehäuse (1) des Elektromotors und der Trommelinnenwand (9) bestehenden Spalt (11) ragender und sich in Achsrichtung der Antriebseinheit erstreckender Steg (8) angeordnet ist, dessen radiale Länge kleiner als die radiale Weite des Spaltes (11) ist.

2. Antriebseinheit, bestehend aus einem Elektromotor und einer von diesem angetriebenen, den Elektromotor aufnehmenden, topfförmigen Trommel (5), die mit ihrem Topfboden (6) mit dem antriebsseitigen Wellenende (7) des Elektromotors verbunden ist und in ihrem Topfboden (6) mindestens eine Durchtrittsbohrung (12) aufweist,
**dadurch gekennzeichnet,**
daß die Trommelinnenwand (9) zum Topfboden (6) oder zur offenen Seite der Trommel (5) hin schräg ansteigend verläuft.

3. Antriebseinheit nach Anspruch 1,
**dadurch gekennzeichnet,**
daß der Steg (8) in bezug auf die Achsrichtung der Antriebseinheit schräg verlaufend angeordnet ist.

4. Antriebseinheit nach Anspruch 1 oder 3,
**dadurch gekennzeichnet,**
daß die Durchtrittsbohrung (12) in bezug auf die Achsrichtung der Antriebseinheit schräg verlaufend ausgebildet ist.

5. Antriebseinheit nach Anspruch 2,
**dadurch gekennzeichnet,**
daß bei einem schräg ansteigenden Verlauf der Trommelinnenwand (9) zum Topfboden (6) hin die Durchtrittsbohrung (12) fluchtend zur Trommelinnenwand (9) im Topfboden (6) vorgesehen ist.

6. Antriebseinheit nach Anspruch 5,
**dadurch gekennzeichnet,**
daß die Durchtrittsbohrung mit der gleichen Steigung wie die Steigung der Trommelinnenwand (9) schräg verlaufend ausgebildet ist.

7. Antriebseinheit nach einem oder mehreren der Ansprüche 2,5 oder 6, **dadurch gekennzeichnet,**
daß am Gehäuse (1) des Elektromotors und/oder an der Trommelinnenwand (9) mindestens ein radial in den zwischen dem Gehäuse (1) und der Trommelinnenwand (9) bestehenden Spalt (11) ragender und sich in Achsrichtung der Antriebseinheit erstreckender Steg (8) angeordnet ist.

## Claims

1. Drive unit, comprising an electric motor and a pot-shaped drum (5) which is driven by this electric motor, accommodates the electric motor, is connected by means of its pot base (6) to the drive-side shaft end (7) of the electric motor and has at least one through-hole (12) in its pot base (6),
characterized in that
at least one web (8), which extends in the axial direction of the drive unit and projects radially into the gap (11) existing between the housing (1) of the electric motor and the drum inner wall (9), is arranged on the housing (1) of the electric motor and/or on the drum inner wall (9), the radial length of the web (8) being less than the radial width of the gap (11).

2. Drive unit, comprising an electric motor and a pot-shaped drum (5) which is driven by this electric motor, accommodates the electric motor, is connected by means of its pot base (6) to the drive-side shaft end (7) of the electric motor and has at least one through-hole (12) in its pot base (6),
characterized in that
the drum inner wall (9) runs such that it rises obliquely towards the pot base (6) or towards the open side of the drum (5).

3. Drive unit according to Claim 1,
characterized in that
the web (8) is arranged such that it runs obliquely with respect to the axial direction of the drive unit.

4. Drive unit according to Claim 1 or 3,
characterized in that
the through-hole (12) is constructed such that it runs obliquely with respect to the axial direction of the drive unit.

5. Drive unit according to Claim 2,
characterized in that
if the drum inner wall (9) runs such that it rises obliquely towards the pot base (6), the through-hole (12) is provided in the pot base (6) such that it is aligned with respect to the drum inner wall (9).

6. Drive unit according to Claim 5,
characterized in that
the through-hole is constructed such that it runs obliquely at the same gradient as the gradient of the drum inner wall (9).

7. Drive unit according to one or more of Claims 2, 5 or 6, characterized in that
at least one web (8), which extends in the axial direction of the drive unit and projects radially into the gap (11) existing between the housing (1) and the drum inner wall (9), is arranged on the housing (1) of the electric motor and/or on the drum inner wall (9).

## Revendications

1. Unité d'entraînement constituée d'un moteur électrique et d'un tambour (5) en forme de pot, qui reçoit le moteur électrique, qui est entraîné par ce moteur, qui est relié par son fond (6) de pot au bout (7) de l'arbre du moteur électrique situé du côté d'entraînement et qui comporte au moins un trou (12) de passage au fond (6) de son pot, caractérisée en ce qu'il est disposé sur le boîtier (1) du moteur électrique et/ou sur la paroi (9) intérieure du tambour au moins une barrette (8), qui fait saillie radialement dans l'intervalle (11) existant entre le boîtier (1) du moteur électrique et la paroi (9) intérieure du tambour, qui s'étend dans la direction axiale de l'unité d'entraînement et dont la longueur radiale est inférieure à l'étendue radiale de l'intervalle (11).

2. Unité d'entraînement constituée d'un moteur électrique et d'un tambour (5) en forme de pot, qui reçoit le moteur électrique, qui est entraîné par ce moteur, qui est relié par son fond (6) de pot au bout (7) de l'arbre du moteur électrique situé du côté d'entraînement et qui comporte au moins un trou (12) de passage au fond (6) de son pot, caractérisée en ce que la paroi (9) intérieure du tambour s'étend en biais de manière ascendante en direction du fond (6) du pot ou en direction de la face ouverte du tambour (5).

3. Unité d'entraînement suivant la revendication 1, caractérisée en ce que la barrette (8) est disposée de manière à s'étendre en biais par rapport à la direction axiale de l'unité d'entraînement.

4. Unité d'entraînement suivant la revendication 1 ou 3, caractérisée en ce que le trou (12) de passage est ménagé de manière à s'étendre en biais par rapport à la direction axiale de l'unité d'entraînement.

5. Unité d'entraînement suivant la revendication 2, caractérisée en ce que, pour un tracé ascendant en biais de la paroi (9) intérieure du tambour en direction du fond (6) du pot, le trou (12) de passage est prévu au fond (6) du pot en alignement avec la paroi (9) intérieure du tambour.

6. Unité d'entraînement suivant la revendication 5, caractérisée en ce que le trou de passage est réalisé de manière à s'étendre en biais en ayant la même pente que la paroi (9) intérieure du tambour.

7. Unité d'entraînement suivant l'une ou plusieurs des revendication 2, 5 ou 6, caractérisée en ce qu'il est disposé sur le boîtier (1) du moteur électrique et/ou sur la paroi (9) intérieure du tambour au moins une barrette (8), qui fait saillie radialement dans l'intervalle existant entre le boîtier (1) et la paroi (9) intérieure du tambour et qui s'étend dans la direction axiale de l'unité d'entraînement.
